# FASCICULE DE BREVET EUROPEEN

(11) **EP 1 620 653 B1**
(45) Date de publication et mention de la délivrance du brevet: **04.04.2007**
(21) Numéro de dépôt: 03816864.7
(22) Date de dépôt: 06.05.2003
(51) Int. Cl.: F16B 17/00, F16B 21/16

(54) **PROCEDE D'ASSEMBLAGE D'UNE PALETTE A UN POUSSOIR PLEIN ET ASSEMBLAGE OBTENU**
VERFAHREN ZUR MONTAGE EINER PALETTE AN EINER VOLLEN STÖSSELSTANGE UND ENTSPRECHENDE MONTAGE
METHOD FOR ASSEMBLING A PALLET WITH A FULL PUSHROD AND CORRESPONDING ASSEMBLY

(43) Date de publication de la demande: 01.02.2006
(73) Titulaire: Valeo Systèmes de Contrôle Moteur, 95520 Osny (FR)
(72) Inventeur: MAERKY, Christophe, F-95310 SAINT OUEN L'AUMONE (FR); COUDURE-TUQUET, Guillaume, F-63500 ISSOIRE (FR)
(74) Mandataire: Parzy, Benjamin Alain
(86) Numéro de dépôt international: PCT/FR2003/001402
(87) Numéro de publication internationale: WO 2004/099634

(56) Documents cités:
- DE-A- 3 732 223
- GB-A- 1 107 352
- US-A- 2 030 165
- US-A- 3 099 057
- US-A- 3 693 247

## Description

L'invention concerne un procédé d'assemblage d'une palette à un poussoir plein s'étendant à travers une ouverture de la palette, et l'assemblage obtenu.

### ARRIERE-PLAN DE L'INVENTION

Dans certains actionneurs électromagnétiques connus, la palette est directement sertie sur le poussoir. On utilise par exemple le procédé d'assemblage décrit dans le document FR-A-2 573 140, dans lequel le poussoir est emmanché à force dans la palette puis la palette est sertie sur le poussoir.

Ce procédé possède divers inconvénients. Tout d'abord, la palette doit être fabriquée dans un métal sertissable, et ce type de métal ne possède pas forcément des caractéristiques magnétiques optimisées.

De plus, lors de l'emmanchement à force ou lors du sertissage, la palette risque de se déformer de sorte que la planéité des faces actives de la palette ou la perpendicularité de ses faces avec le poussoir sont altérées, ce qui induit entre les stators de l'actionneur et la palette des entrefers parasites engendrant une hausse de la consommation électrique de ces actionneurs.

Pour remédier à cette déformation, il est nécessaire de prévoir des reprises d'usinage de la palette, ce qui se révèle onéreux.

On connaît du document US-A-3693247 un procédé d'assemblage de deux plaques au moyen d'une douille cylindrique dans laquelle est introduit un mandrin. La douille comporte un pied conique prenant appui dans un départ conique de l'alésage de l'une des plaques. Pour fixer les plaques, on pousse le mandrin tandis que l'on sertit l'extrémité de la douille ne comportant pas le pied.

On connaît par ailleurs du document US-A-3099057 des douilles thermoplastiques dont l'une au moins des portions d'extrémité est retournée, ce qui nécessite l'introduction d'un outil dans la douille.

Dans les deux cas, l'intérieur de la douille n'est pas libre (présence d'un mandrin, d'un outil) ne permettant pas l'assemblage.

Dans un domaine éloigné, on connaît du document US-A-4 656 721 un procédé d'assemblage d'un barreau creux à un montant d'échelle, comprenant les étapes d'introduire le barreau dans une ouverture du montant avec interposition d'une bague et de sertir la bague de part et d'autre du montant. Lors du sertissage, un outil à extrémité sphérique est introduit dans le barreau, pour former simultanément une gorge dans le barreau et un relief d'ancrage de la bague pénétrant dans la gorge. Ce procédé n'est cependant pas adaptable à des poussoirs pleins.

Egalement dans un domaine éloigné, on connaît du document GB-A-2 042 124 un procédé d'assemblage à rotation d'un palier. Ce procédé comprend les étapes d'introduire un axe dans un manchon avec interposition de bagues de centrage, puis de sertir un organe de butée pour maintenir le manchon en place axialement.

### OBJET DE L'INVENTION

Le procédé d'assemblage selon l'invention vise à remédier à ces inconvénients.

### BREVE DESCRIPTION DE L'INVENTION

Le procédé d'assemblage selon l'invention d'une palette à un poussoir plein s'étendant à travers une ouverture de la palette comprend les étapes suivantes:
- réaliser au moins une gorge sur le poussoir; puis
- introduire le poussoir dans l'ouverture de la palette de sorte que la gorge s'étende de façon sensiblement adjacente à une face de la palette, avec interposition entre le poussoir et la palette d'une bague qui dépasse de part et d'autre de la palette et qui recouvre la gorge; puis
- sertir la bague de part et d'autre de la palette tout en maintenant la palette immobile par rapport au poussoir et perpendiculaire à celui-ci.

Ainsi, le sertissage déforme la bague de façon à créer sur la bague des bourrelets de part et d'autre de la palette, ainsi qu'un relief d'ancrage qui s'étend dans la gorge du poussoir, ce qui assure l'immobilisation de la palette sur le poussoir.

Dans le procédé de l'invention, la palette ne subit plus directement l'effort de sertissage et le risque de déformation de la palette est donc minimisé, de sorte que la planéité de ses faces actives et la perpendicularité de ces faces avec le poussoir sont préservées. En outre, le sertissage étant effectué sur la bague rapportée, la palette peut être réalisée dans un métal plus avantageux du point de vue magnétique que les métaux sertissables habituellement employés.

Dans une variante préférée de l'invention, on réalise sur le poussoir deux gorges qui s'étendent chacune de façon sensiblement adjacente à une face de la palette. Le sertissage donne alors naissance à deux reliefs d'ancrage qui s'étendent chacun dans la gorge correspondante, ce que rend l'ancrage ainsi réalisé plus résistant.

### BREVE DESCRIPTION DES DESSINS

D'autres caractéristiques et avantages de l'invention apparaîtront plus clairement à la lumière de la description qui suit d'un mode de mise en oeuvre particulier non limitatif de l'invention, en référence aux figures des dessins annexés parmi lesquelles:
- la figure 1 est une vue en coupe d'un poussoir et d'une palette assemblés selon le procédé de l'invention, la partie de gauche de la figure illustrant l'ensemble avant sertissage tandis que la partie droite de la figure illustre l'ensemble après sertissage ;
- la figure 2 est une vue de côté avec coupe partielle de l'organe de sertissage avant l'opération de sertissage.

### DESCRIPTION DETAILLEE DE L'INVENTION

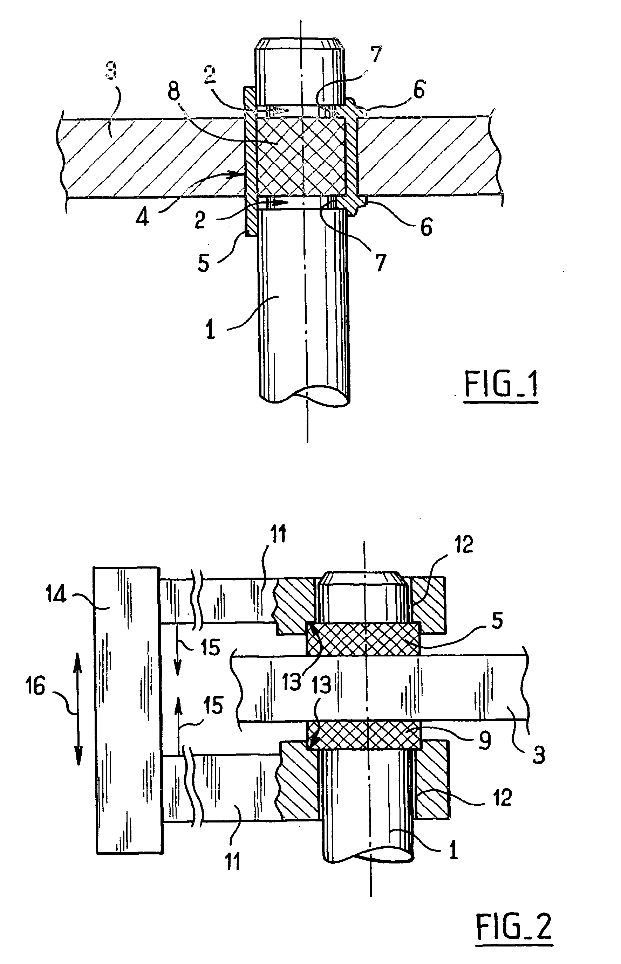

En référence à la figure 1, dans le mode de réalisation préféré de l'invention, deux gorges 2 sont réalisées dans le poussoir 1 plein, les gorges 2 sont espacées d'une distance égale à l'épaisseur de la palette 3 et des stries 8 sont réalisées, par exemple par moletage, sur la surface du poussoir 1 dans la partie comprise entre les gorges 2. Une bague 5 dont la surface externe comporte des stries 9 (voir figure 2) est enfilée sur le poussoir et l'ensemble est introduit dans une ouverture 4 de la palette 3

Le poussoir 1 et la palette 3 sont maintenus par un outillage de maintien (non représenté) dans la position illustrée dans laquelle chacune des gorges 2 s'étend de façon sensiblement adjacente à une face de la palette 3. L'outillage de maintien comprend des moyens de positionnement non représentés permettant de positionner la palette 3 et le poussoir 1 de sorte que la palette 3 s'étende perpendiculairement au poussoir 1. Mes moyens de positionnement comportent des moyens de bridage permettant d'immobiliser la palette 3 et le poussoir 1 dans cette position lors du sertissage.

L'ouverture de la palette 3, la bague 5 et le poussoir 1 sont conçus pour présenter entre eux un jeu d'assemblage permettant la mise en place aisée de ces éléments, ainsi que l'écoulement de la matière de la bague 5 lors du sertissage.

Puis, le procédé comprend l'étape de sertir la bague 5 de part et d'autre de la palette 3, au moyen d'un organe de sertissage illustré par la figure 2. Le résultat du sertissage est illustré sur la partie droite de la figure 1.

L'opération de sertissage donne naissance à des bourrelets 6 sur la bague 5 de part et d'autre de la palette 3 qui enserrent celle-ci.

Par ailleurs, des reliefs d'ancrage 7 de la bague 5 sont repoussés dans les gorges 2 sous l'effet du sertissage, ce qui permet l'immobilisation de la palette 3 sur le poussoir 1.

L'immobilisation en rotation de la palette 3 sur le poussoir 1 est assurée par le serrage causé par l'expansion radiale de la bague 5 dans l'ouverture 4 de la palette 3 sous l'effet de l'effort de compression du sertissage.

Les stries 8 réalisées sur le poussoir 1 entre les gorges 2, c'est-à-dire dans la zone du poussoir 1 qui reste recouverte par la bague 5 après sertissage, et les stries 9 réalisées sur la face extérieure de la bague 5, améliorent l'immobilisation en rotation de la palette et du poussoir l'un par rapport à l'autre.

La bague 5 pourra par exemple être réalisée en acier de type XC10, qui se travaille facilement par sertissage.

Quant à la palette 3, elle pourra par exemple être réalisée dans un alliage de fer et de silicium connu pour ses bonnes propriétés magnétiques ou tout autre matériau ayant un comportement magnétique approprié.

Pour réaliser le sertissage, on utilise de préférence comme illustré sur la figure 2, un organe de sertissage 10 comportant deux mâchoires 11 qui présentent chacune un passage 12 pour le poussoir 1 ainsi qu'une surface d'appui 13 contre la bague 5.

Les mâchoires 11 sont solidaires d'un support 14, et l'une des mâchoires, ou les deux, sont mobiles selon les flèches 15 pour pouvoir être rapprochées l'une de l'autre lors du sertissage par un actionneur non représenté.

On prévoit avantageusement de monter le support 14 de l'organe de sertissage avec une liberté de mouvement par rapport à l'outillage de maintien de la palette 3 et du poussoir 1. Lors du sertissage, le support 14 est alors libre de se déplacer axialement comme symbolisé par la double flèche 16 de sorte qu'on évite une déformation de la palette même si le mouvement des mâchoires 11 n'est pas symétrique par rapport à la palette. On prévoit également une liberté de mouvement radiale du support 14 de l'organe de sertissage 10 pour ne pas faire fléchir le poussoir 1 lors du sertissage. Ces dispositions permettent de préserver la perpendicularité des faces de la palette 3 avec le poussoir 1, ainsi que la planéité des faces de la palette 3 sans qu'il soit nécessaire de procéder à un usinage de la palette après sertissage.

L'invention n'est pas limitée au mode particulier de réalisation qui vient d'être décrit, mais bien au contraire entend couvrir toute variante qui entre dans le cadre de l'invention tel que défini par les revendications.

En particulier, bien que l'on ait indiqué que deux gorges sont réalisées sur le poussoir, on pourra le cas échéant ne réaliser qu'une seule gorge, ce qui simplifie l'assemblage, mais conduit à une liaison moins résistante.

Bien que l'on ait indiqué que l'on réalise des stries sur le poussoir et sur la bague, on pourra utiliser un poussoir et une bague lisses si l'immobilisation en rotation obtenue par sertissage est considérée comme suffisante.

On pourra interposer une rondelle sur chacune des faces de la palette préalablement au sertissage.

## Revendications

1. Procédé d'assemblage d'une palette (3) à un poussoir (1) plein s'étendant à travers une ouverture (4) de la palette (3), ce procédé comprenant les étapes de :
- réaliser au moins une gorge (2) sur le poussoir (1); puis
- introduire le poussoir (1) dans l'ouverture (4) de la palette (3) de sorte que la gorge (2) s'étende de façon sensiblement adjacente à une face de la palette (3), avec interposition entre le poussoir (1) et la palette (3) d'une bague (5) qui dépasse de part et d'autre de la palette (3) et qui recouvre la gorge (2); puis
- sertir la bague (5) de part et d'autre de la palette (3) tout en maintenant la palette (3) immobile par rapport au poussoir (1) et perpendiculaire à celui-ci.

2. Procédé d'assemblage selon la revendication 1, **caractérisé en ce que** le sertissage est réalisé au moyen d'un organe de sertissage (10) qui est monté avec une liberté de mouvement par rapport à la palette (3) et au poussoir (1) en cours de sertissage.

3. Assemblage comprenant une palette (3) et un poussoir (1) plein s'étendant à travers une ouverture (4) de la palette, **caractérisé en ce que** le poussoir comporte au moins une gorge (2) et **en ce que** l'assemblage comporte une bague s'étendant entre la palette et le poussoir et dans la gorge du poussoir, la bague étant sertie de part et d'autre de la palette.

4. Assemblage selon la revendication 3, **caractérisé en ce que** le poussoir (1) comporte deux gorges (2) s'étendant chacune de façon sensiblement adjacente à une face de la palette (3).

5. Assemblage selon la revendication 3, **caractérisé en que** le poussoir (1) comporte des stries (8) sur une zone qui reste recouverte par la bague (5) après sertissage.

6. Assemblage selon la revendication 3, **caractérisé en que** la bague (5) comporte des stries externes (9) sur une zone engagée dans l'ouverture (4) de la palette (3).

## Claims

1. A method of assembling an armature (3) to a solid pusher (1) extending through an opening (4) in the armature (3), the method comprising the steps of:
· making at least one groove (2) in the pusher (1); then
· inserting the pusher (1) into the opening (4) in the armature (3) so that the groove (2) extends substantially adjacent to a face of the armature (3), and interposing between the pusher (1) and the armature (3) a ring (5) that projects on either side of the armature (3) and that overlies the groove (2); and then
· crimping the ring (5) on either side of the armature (3) while holding the armature (3) stationary relative to the pusher (1) and perpendicular thereto.

2. A method of assembly according to claim 1, **characterized in that** the crimping is performed by means of a crimping member (10) that is mounted free to move relative to the armature (3) and to the pusher (1) during crimping.

3. An assembly comprising an armature (3) and a solid pusher (1) extending through an opening (4) in the armature, the assembly being **characterized in that** the pusher includes at least one groove (2), and **in that** the assembly includes a ring extending between the armature and the pusher, and into the groove of the pusher, the ring being crimped on either side of the armature.

4. An assembly according to claim 3, **characterized in that** the pusher (1) has two grooves (2) each extending substantially adjacent to a respective face of the armature (3).

5. An assembly according to claim 3, **characterized in that** the pusher (1) has serrations (8) in a zone that remains covered by the ring (5) after crimping.

6. An assembly according to claim 3, **characterized in that** the ring (5) includes external serrations (9) over a zone that is engaged in the opening (4) of the armature (3).

## Patentansprüche

1. Verfahren zum Montieren einer Platte (3) an einem massiven Stößel (1), der sich durch eine Öffnung (4) der Platte (3) erstreckt, wobei dieses Verfahren die Schritte umfasst:
- Herstellen mindestens einer Nut (2) an dem Stößel (1), danach
- Einführen des Stößels (1) in die Öffnung (4) der Platte (3), derart, dass sich die Nut (2) im Wesentlichen angrenzend zu einer Oberfläche der Platte (3) erstreckt, wobei zwischen dem Stößel (1) und der Platte (3) ein Ring (5) angeordnet wird, der auf beiden Seiten der Platte (3) übersteht und die Nut (2) abdeckt, und daraufhin
- Quetschen des Ringes (5) auf beiden Seiten der Platte (3), während die Platte (3) gegenüber dem Stößel (1) stationär und senkrecht zu diesem gehalten wird.

2. Verfahren zum Montieren nach Anspruch 1, **dadurch gekennzeichnet, dass** das Quetschen mittels eines Quetschelements (10) erfolgt, das so gelagert ist, dass es beim Quetschen relativ zu der Platte (3) und dem Stößel (1) frei beweglich ist.

3. Montageeinheit, umfassend eine Platte (3) und einen massiven Stößel (1), der sich durch eine Öffnung (4) der Platte erstreckt, **dadurch gekennzeichnet, dass** der Stößel mindestens eine Nut (2) umfasst und dass die Montageeinheit einen Ring umfasst, der sich zwischen der Platte und dem Stößel und in der Nut des Stößels erstreckt, wobei der Ring auf beiden Seiten der Platte gequetscht wird.

4. Montageeinheit nach Anspruch 3, **dadurch gekennzeichnet, dass** der Stößel (1) zwei Nuten (2) umfasst, die sich jeweils im Wesentlichen angrenzend an eine Fläche der Platte (3) erstrecken.

5. Montageeinheit nach Anspruch 3, **dadurch gekennzeichnet, dass** der Stößel (1) Riefen (8) in einem Bereich aufweist, der nach dem Quetschen von dem Ring (5) überdeckt bleibt.

6. Montageeinheit nach Anspruch 3, **dadurch gekennzeichnet, dass** der Ring (5) Außenriefen (9) in einem Bereich aufweist, der in der Öffnung (4) der Platte (3) steckt.
